# EUROPEAN PATENT SPECIFICATION

(11) **EP 3 963 258 B1**
(45) Date of publication and mention of the grant of the patent: **24.07.2024**
(21) Application number: 19722832.3
(22) Date of filing: 30.04.2019
(51) Int. Cl.: F22B 1/16, F22B 37/00, F28F 11/02

(54) **HEAT EXCHANGER WITH A STABILIZER**
WÄRMETAUSCHER MIT EINEM STABILISTOR
ÉCHANGEUR DE CHALEUR AVEC UN STABILISATEUR

(43) Date of publication of application: 09.03.2022
(73) Proprietor: FRAMATOME GMBH, 91052 Erlangen (DE)
(72) Inventor: SCHÖNHEIT, Nico, 91074 Herzogenaurach (DE); ALAZ, Zafer, 91088 Bubenreuth (DE); CAO, Hong Phuc, 90763 Fürth (DE)
(74) Representative: Lavoix
(86) International application number: PCT/EP2019/061101
(87) International publication number: WO 2020/221444

(56) References cited:
- EP-A1- 0 047 410
- WO-A2-97/21956
- FR-A1- 2 595 439
- US-A- 4 283 615
- US-A- 4 590 991
- US-A- 5 167 064

## Description

The invention relates to a heat exchanger, in particular a steam generator for a pressurized water reactor, and to an according stabilizer for a heating or cooling tube of the heat exchanger, in particular for a steam generator tube. The invention also relates to a method of stabilizing a heating or cooling tube of a heat exchanger.

A steam generator in a pressurized water reactor is a heat exchanger which usually comprises a large number of steam generator (heating) tubes fixed in a tube sheet. During normal operation each steam generator tube carries a flow of primary reactor coolant. According to US 4 800 637 A or DE 10 2016 122 513 B3 it is common practice to close / seal a damaged steam generator tube with the help of a sealing plug, thereby diverting the flow of primary reactor coolant to the other (intact) steam generator tubes. However, a such-closed steam generator tube might still rupture / tear off above the tube sheet and waggle around, thereby causing damage to the surrounding steam generator tubes.

WO 97/21956 A2 describes a system and method for stabilizing a nuclear heat exchanger heat transfer tube.

It is an objective of the present invention to minimize the risk of rupture of a steam generator tube, or more general a heat exchanger tube, in the case of wear indications with simple but reliable means. In the case of rupture, the according device shall still provide stability for the tube arrangement and protect the non-ruptured tubes from oscillations of the one which is ruptured. The solution shall be easy to produce, to install, and to maintain.

Claim 1 describes a heat exchanger according to the invention.

Thus, in somewhat simplified words, the invention proposes a lengthy stabilizer reaching from a first tube section within the tube sheet to a second tube section above the tube sheet, thereby fixing the second tube section, in particular in the case of rupture.

Although the stabilizer may have a plug-like shape, it does not seal the steam generator tube but permits an inflow of secondary reactor coolant and thus a pressure balance from one end to the other in the case of rupture. Hence, the forces acting on the stabilizer in axial direction in such a case are relatively small. Therefore, the clamping of the stabilizer in the first tube section must be designed for relatively small forces only, minimizing mechanical stresses on the steam generator tube and the surrounding tube sheet.

Further advancements of the general concept and related advantages are subject of the dependent claims and the subsequent description.

Preferably, the heat exchanger is a steam generator for a pressurized water reactor. In particular, in this case, the heat exchanger may include one or more of the following features:
- the heat exchanger comprises a tube sheet and a steam space adjoining the tube sheet, and the cooling or heating tubes are steam generator tubes being designed to carry a primary reactor coolant during normal operation, each steam generator tube comprising a first tube section being fixed in the tube sheet and a second tube section protruding into the steam space, wherein at least one of the steam generator tubes is closed by a sealing plug inserted into the first tube section, the stabilizer being a separate stabilizer inserted into said closed steam generator tube adjacent to or above the sealing plug. A radial bore reaches through the wall from the cavity to a circular gap between the body and the steam generator tube wall, forming a fluid passage for achieving the pressure balance mentioned above.
- the body of the stabilizer has an essentially cylindrical shape.
- the stabilizer comprises a further supporting section arranged within the middle section, wherein said further supporting section is preferably arranged within the first tube section. This provides further stability in the operating position.
- the clamping section and the supporting section(s) have a larger outer diameter than the rest of the body.
- the stabilizer is fixed to the steam generator tube by roll expansion of a section of the wall around the cavity. The rear-end opening facilitates insertion of a corresponding rolling tool into the cavity to perform the roll expansion.
- the stabilizer is formed integrally, i.e. as single piece. In particular, the stabilizer may be made of an alloy, for example by casting and/or cutting and/or drilling. The integral design has the advantage that welding seams and corresponding examination and documentation procedures are completely avoided.

Further advantage due to avoidance of weld joint is that distortion due to weld seam shrinkage is avoided and hence high dimensional accuracy can be reached by the applied manufacturing process.

Exemplary embodiments of the invention and related advantages are subsequently described with reference to the accompanying schematic drawings.
FIG. 1 shows a longitudinal sectional view of a stabilizer according to the invention.
FIG. 2 shows a perspective view of the stabilizer according to FIG. 1.
FIG. 3 shows a sectional view of a steam generator tube sheet and a plurality of steam generator tubes, wherein a stabilizer according to FIG. 1 and 2 is installed within one of the steam generator tubes.

Corresponding elements are associated with the same reference numerals throughout the figures.

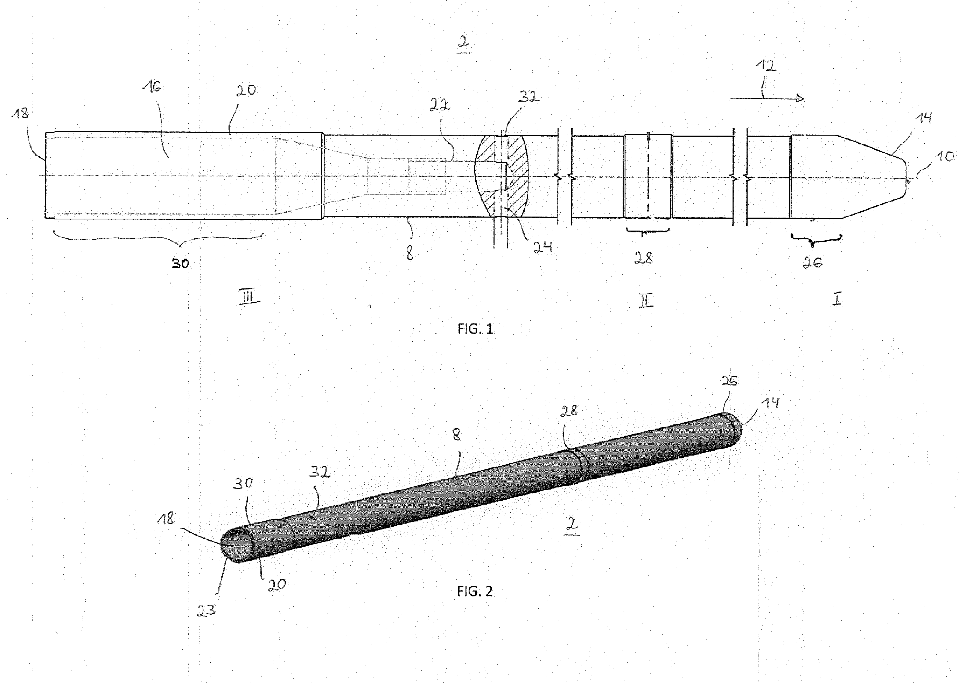

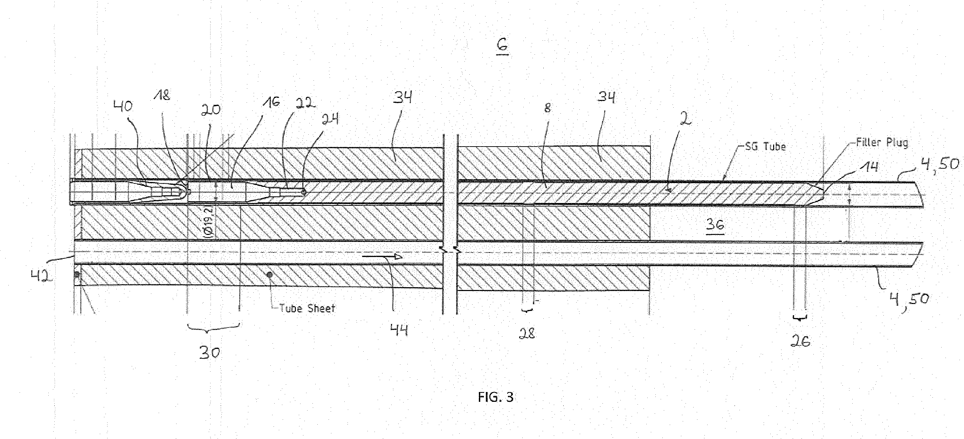

The stabilizer plug or briefly stabilizer 2 according to FIG. 1 and 2 is intended for insertion into a steam generator tube 4 of a steam generator 6, as described further below in detail in connection with FIG. 3. More generally speaking, the steam generator tube 4 is one an example of a heating or cooling tube 50 of a heat exchanger.

The stabilizer 2 comprises an essentially cylindrical body 8 which is preferably integrally (i.e. as a single piece) made of metallic material, in particular an alloy such as Inconel 690 TT. The lengthy body 8 extends along and is essentially axially symmetric with respect to a longitudinal axis 10. The outer diameter of the body 8 varies slightly along the axial position as described below. The maximum value of the outer diameter is chosen such that the stabilizer 2 can be inserted into a corresponding steam generator tube 4 without undue effort but also with only little or no radial clearance.

The stabilizer 2 comprises a front-end section I, a rear-end section III and a middle section II in between, wherein these terms relate to the direction of insertion 12 along the axis 10.

The front-end section I comprises a flattened cone-like tip 14 to ease self-centering insertion into the corresponding steam generator tube 6.

The rear-end section III comprises a longitudinal central bore or recess or cavity 16 accessible through an opening 18 from the rear side. In other words, the rear-end portion forms a hollow cylinder with a ring-like wall 20 which encloses an essentially cylindrical inner space, i.e. said cavity 16. As shown in FIG. 1, the cavity 16 may be tapered in the direction towards its front end. That is, the inner diameter of the hollow space or cavity 16 may decrease in this direction, wherein the thickness of the wall 20 increases accordingly. At its front end the cavity 16 may comprise a threaded cylindrical portion 22 (with internal threads) for receiving a corresponding tool used during insertion or removal of the stabilizer 2 in / from the steam generator tube 4. At the rear end the ring-like wall 20 may comprise a nut 23 or groove for holding and/or providing a rotation lock for a tube expander tool during installation (see below).

For reasons of fluid exchange and pressure balance explained further below, there is a radial bore 24 through the ring-like wall section preferably at the front end of the cavity 16, fluidically connecting the cavity 16 with the outer environment. Preferably, the radial bore 24 extends in both directions from inside to outside. There might be several radial bores pointing in different radial directions.

While the rear-end section III of the stabilizer 2 is preferably hollow as described above, the middle section II and the front-end section I are preferably massive (i.e. without bores or hollow portions).

For most parts the outer diameter of the stabilizer 2 has the same base value throughout its entire length. This base value is somewhat smaller than the inner diameter of the corresponding steam generator tube 4. However, there are some sections or zones, as viewed in longitudinal (axial) direction, wherein the outer diameter of the body 8 is somewhat larger than the base value. These sections may constitute a number of clamping sections and/or supporting sections. As explained above, the outer diameter within the clamping section(s) is chosen such that stabilizer 2 can be inserted into a corresponding steam generator tube 4 without undue effort but also with only little or no radial play or clearance. This way, a force-fit is realized by the clamping section(s). The same may apply to the supporting section(s), such that they may act as clamping sections as well. Preferably, however, the outer diameter of the supporting section(s) is chosen in between the the base value and the value associated with the clamping section(s).

Preferably, the transitions between sections or zones with different diameters are tapered of sloped, preferably with an angel of 45° with respect to the central axis 10. Thus, sharp steps of 'jumps' in the outer contour of the body 8 are avoided, minimizing the risk of getting stuck during the insertion process into a corresponding tube.

In particular, the front-end section I comprises a stabilizing section or supporting section 26 of the above-mentioned kind, which preferably is located just behind the cone-like tip 14. Furthermore, there is a similar supporting section 28 located within the middle section II.

Finally, there may be a fixing section or clamping section 30 within the rear-end section III of the stabilizer 2, preferably realized by the ring-like wall 20 around the rear portion of the central cavity 16. Viewed in direction of insertion12, the clamping section 30 within the rear-end section III ends before the radial bore 24. That is, the respective outer opening 32 of the radial bore 24 is located within a section of the body 8 which is characterized by the (smaller) base value of the outer diameter. As described below, the clamping section 30 of the rear-end section III is intended to be fixed in a corresponding steam generator tube 2 by rolling, also known as roll expanding.

Turning to FIG. 3, a preferred application of the stabilizer 2 will now be described.

FIG. 3 shows a longitudinal sectional view of a part of a steam generator 6, in particular a steam generator in a pressurized water reactor of a nuclear power plant. Such a steam generator 6 acts as a material barrier and heat exchanger between a primary reactor cooling circuit and a secondary reactor cooling circuit, thereby transferring heat from a pressurized primary reactor coolant to a secondary reactor coolant, vaporizing the secondary reactor coolant. However, the stabilizer 2 according to the invention is suited for other heat exchangers with a similar structure as well.

The image section shows a plurality of so-called heating tubes or steam generator tubes 4 which during operation are flown through, usually in parallel flow configuration, by a fluid heating medium. In the nuclear context mentioned above, this is a primary reactor coolant. The steam generator tubes 4 are led through and fixed in a pressure-sealed manner in a tube-sheet 34. The tube sheet 34 is part of a sealed enclosure, also known as a steam vessel, which during operation is flown through by a cooling medium. In the nuclear context mentioned above, this is a secondary reactor coolant. Due to the thermal contact of the steam generator tubes 4 reaching into the steam space 36 of the steam vessel, heat is transferred from the heating medium to the cooling medium, thereby heating and usually vaporizing the cooling medium within the steam vessel.

In the embodiment of FIG. 3 the primary reactor coolant (coming from a header not shown here) enters the steam generator tubes 4 from the left and flows to the right, firstly through the section within the tube sheet 34, and then through the steam space 36 of the steam vessel right to the tube sheet 34. Of course, this orientation is only exemplary for the purpose of description. Afterwards, the steam generator tubes 4 leave the steam vessel through another tube sheet not shown here or (after a bend) through another section of the same tube sheet 34, only a portion of which is shown here. The left-hand side of the tube sheet 34 may be called primary side, and the right-hand side may be called secondary side of the steam generator 6. In the shown section the steam generator tubes 4 are straight, arranged parallel to each other, and have a constant inner diameter.

Usually there is a multitude of steam generator tubes 4. During operation individual of these tubes may get worn-out, such that cracks and/or fissures start to appear (so called circumferential indications which can be detected in an early stage by, for example, eddy current based measurements). Usually they are located within the steam space 36 just above the tube sheet 34. In the worst case the respective steam generator tube 4 might get ruptured in the region of the cracks. This would lead to an injection of primary reactor coolant into the secondary reactor coolant. To avoid this highly undesirable situation, it is common practice to close / seal a damaged steam generator tube 4 at its entry with the help of a sealing plug 40, thereby diverting the flow of primary reactor coolant to the other (intact) steam generator tubes 4.

Such a sealing plug 40 is shown in FIG. 3 in its operating position within a steam generator tube 4. More specifically, the sealing plug 40 is inserted from the primary side of the steam generator 6 into the according inlet opening 42 of the steam generator tube 4 in question, such that the sealing plug 40 is located within an entry region of the steam generator tube 4 within the tube sheet 34. Strong holding forces and a high level of leak tightness are achieved by fixing the sealing plug within the steam generator tube 4 by the process of roll expansion.

However, a such-closed steam generator tube 4 might still rupture / tear off above the tube sheet 34 and waggle around, thereby causing damage to the surrounding steam generator tubes 4. To avoid this, a stabilizer 2 of the above-described kind is inserted into the damaged steam generator tube 4 as shown in FIG. 3.

In its operation position the stabilizer 2 is located downstream of the sealing plug 40 within the steam generator tube 4 in question, as viewed in the normal flow direction 44 of the primary reactor coolant. More specifically, the stabilizer 2 is dimensioned and located such that its rear-end section III with the clamping section 30 and parts of or all of the middle section II with the supporting section 28 are located within the tube sheet 34 region (at least the supporting section 28 is arranged within the tube sheet 34), whereas the front-end section I with the supporting section 26 is located within the steam space 36 region of the steam generator tube 4. Hence, in the case of rupture in the most critical region slightly above the tube sheet 34, the disrupted steam generator tube 4 is hold and fixed in its initial position by the inserted stabilizer 2. Of course, the stabilizer 2 may also provide support for the steam generator tube 4 and may dampen tube oscillations even before rupture, thereby preventing or at least delaying rupture.

Fixing of the stabilizer 2 within the steam generator tube is mainly achieved by the clamping section 30 of the rear-end section III. The supporting sections 26, 28 are intended mainly for supporting the surrounding steam generator tube 4 but do not need to provide fixing forces. To the purpose of fixing, the ring-like wall 28 of the rear-end section III is pressed radially outwards (i.e. clamped) against the tube wall of the steam generator tube 4 during the installation process, preferably by the process of roll expanding (similar to the fixing of the sealing plug 14 within the tube). Hence, a friction-locked connection of the stabilizer 2 to the steam generator tube 4 is established due to the permanent deformation of the ring-like wall 28 of the rear-end section III in radial direction.

A well-defined fixing force can be achieved by controlling the torque of a tube expander tool used for the process of roll expansion, such that a given maximum clamping torque is reached but not exceeded.

As explained above, neither of the supporting regions 26, 28 nor the rest of the body 8 of the stabilizer 2 are designed to completely seal the steam generator tube 4. Rather, in the case of tube rupture or cracks or fissures an inflow of secondary reactor coolant flows into the steam generator tube 4 - from the secondary side to the primary side (here: from right to left) - through the remaining gaps and through the radial bore 24 into the cavity 16 and the remaining space towards the sealing plug 40. Thus, a pressure balance between the primary side and the secondary side of the stabilizer 2 is achieved.

Hence, the forces acting on the stabilizer 2 in axial direction in such a case are relatively small. Therefore, the clamping section 30 of the stabilizer 2 in the rear-end section III must be designed for relatively small forces only, minimizing mechanical stresses on the steam generator tube 4 and the surrounding tube sheet 34. In particular, the holding forces established during roll expansion can be set considerably lower than the holding forces related to the sealing plug 40. This also eases the removal of the stabilizer 2 from the steam generator tube 4 without damaging it in the case of need. Therefore, the installation process is reversible.

During installation, the stabilizer 2 is pushed into to the steam generator tube 4 in question until the desired mounting position is reached, leaving some space in the primary-side entry region of the steam generator 4 tube for the sealing plug 40. Then the stabilizer 2 is fixed within the steam generator tube 4 by roll expansion in the clamping section 30 as described above. Afterwards, the sealing plug 14 is inserted into the steam generator tube 4 upstream to the stabilizer 2. Finally, the sealing plug 40 is fixed and sealed by roll expansion. Advantageously, the same set of remotely operatable tools can be used both for the installation of the stabilizer 2 and the sealing plug 40. In particular, existing tools for installing the sealing plug 40 can also be used for installing the stabilizer 2 without or with just small modifications. The whole installation process can be realized in a fast and efficient manner.

Typical dimensions of the stabilizer 2 and the surrounding elements may be chosen as follows:
- overall length of the stabilizer: 759 mm
- length of the portion within the tube sheet: 609 mm
- length of the portion protruding into the steam space: 150 mm
- inner diameter of the steam generator tube: 19,6 mm
- base diameter of the body: 18 mm
- diameter within the supporting sections: 18,7 mm
- diameter within the clamping section before roll expansion: 19,2 mm
- diameter within the clamping section after roll expansion: 20 mm
- length of supporting sections: 10 mm
- length of clamping section: 20 - 30 mm
- extraction force after roll expansion: 8,4 kN
- thickness of tube sheet: 706 mm
- length of the sealing plug: 96 mm

Of course, these are only exemplary values with respect to one given steam generator geometry.

While the installation process and preferred application has been described with reference to steam generator of a nuclear reactor, the stabilizer according to the invention can be used in practically any steam generator, or more generally any heat exchanger, which comprises steam generator tubes, or more generally heating or cooling tubes to be flown through by a primary flow medium and which are fixed within a tube sheet. In the case of a heat exchanger which does not act as a steam generator (vaporizer) with respect to the secondary flow medium, the term 'steam space' may be replaced by 'secondary flow medium space' or similar, whereas the term 'steam generator tube' may be replaced by 'heating or cooling tube' or 'heat exchanger tube' or 'primary flow medium tube' or similar.

### List of reference numerals

- 2: stabilizer
- 4: steam generator tube
- 6: steam generator
- 8: body
- 10: axis
- 12: direction of insertion
- 14: tip
- 16: cavity
- 18: opening
- 20: wall
- 22: cylindrical portion
- 23: nut
- 24: bore
- 26: supporting section
- 28: supporting section
- 30: clamping section
- 32: opening
- 34: tube sheet
- 36: steam space
- 40: sealing plug
- 42: inlet opening
- 44: flow direction
- 50: heating or cooling tube

- I: front-end section
- II: middle section
- III: rear-end section

## Claims

1. Heat exchanger with a number of heating or cooling tubes (50), each fixed in a tube sheet (34) and protruding beyond the tube sheet (34), wherein at least one of the heating or cooling tubes (50) is stabilized by an inserted stabilizer (2), the heating or cooling tube (50) comprising a first tube section fixed within the tube sheet (34) and a second tube section protruding beyond the tube sheet (34),
the stabilizer (2) comprising a lengthy body (8) with a clamping section (30) fixed inside the first tube section and a supporting section (26) resting against the second tube section,
wherein the stabilizer (2) is designed to permit a fluid flow through and/or around its body (8),
wherein the stabilizer (2) comprises a rear-end section (III), a front-end section (I) and a middle section (II) in between, wherein the clamping section (30) is arranged within the rear-end section (III), and the supporting section (26) is arranged within the front-end section (I);
wherein the rear-end section (III) comprises a central cavity (16) accessible through a rear-end opening (18), and wherein the cavity (16) is enclosed by a ring-like wall (20),
**characterized in that** a radial bore (24) reaches through the wall (20) from the cavity (16) to a circular gap between the body (8) and the heating or cooling tube (50), forming a fluid bypass.

2. Heat exchanger according to claim 1, wherein the heat exchanger is a steam generator for a pressurized water reactor.

3. Heat exchanger according to claim 2, comprising a steam space (36) adjoining the tube sheet (34), and
wherein the cooling or heating tubes are steam generator tubes (4) being designed to carry a primary reactor coolant during normal operation, each steam generator tube (4) comprising a first tube section being fixed in the tube sheet (34) and a second tube section protruding into the steam space (36),
wherein at least one of the steam generator tubes (4) is closed by a sealing plug (40) inserted into the first tube section,
the stabilizer (2) being a separate stabilizer (2) inserted into said closed steam generator tube (4) adjacent to or above the sealing plug (40).

4. Heat exchanger according to claim 3, wherein the body (8) has an essentially cylindrical shape.

5. Heat exchanger according to claim 3 or 4, wherein the stabilizer (2) comprises a further supporting section (28) arranged within the middle section (II).

6. Heat exchanger according to claim 5, wherein said further supporting section (28) is arranged within the first tube section.

7. Heat exchanger according to any of the claims 3 to 6, wherein the clamping section (30) and the supporting section(s) (26, 28) have a larger outer diameter than the rest of the body (8).

8. Heat exchanger according to claim 7, wherein the stabilizer (2) is fixed to the steam generator tube (4) by roll expansion of a section of the wall (20) around the cavity (16).

9. Heat exchanger according to any of claim 3 to 8, wherein the stabilizer (2) is formed integrally.

10. Heat exchanger according claim 9, wherein the stabilizer (2) is made of an alloy.

11. Heat exchanger according to any of claims 3 to 10, wherein the sealing plug (40) is arranged upstream to the stabilizer (2), as viewed in flow direction of the primary reactor coolant.

12. Method of stabilizing a heating or cooling tube (50) of a heat exchanger, the heating or cooling tube (50) comprising a first tube section fixed within a tube sheet (34) and a second tube section protruding beyond the tube sheet (34), wherein a stabilizer (2) is inserted and clamped into the heating or cooling tube (50), the stabilizer (2) comprising a lengthy body (8) with a clamping section (30) fixed inside the first tube section and a supporting section (26) resting against the second tube section,
wherein the stabilizer (2) is designed to permit a fluid flow through and/or around its body (8),
wherein the stabilizer (2) comprises a rear-end section (III), a front-end section (I) and a middle section (II) in between, wherein the clamping section (30) is arranged within the rear-end section (III), and the supporting section (26) is arranged within the front-end section (I);
wherein the rear-end section (III) comprises a central cavity (16) accessible through a rear-end opening (18), and wherein the cavity (16) is enclosed by a ring-like wall (20), and
wherein a radial bore (24) reaches through the wall (20) from the cavity (16) to a circular gap between the body (8) and the heating or cooling tube (50), forming a fluid bypass;
and wherein afterwards the heating or cooling tube (50) is closed and sealed by a separate sealing plug (40).

13. Method according to claim 12, wherein the heat exchanger is a steam generator.

## Patentansprüche

1. Wärmetauscher mit einer Anzahl von Heiz- oder Kühlrohren (50), die jeweils in einem Rohrboden (34) befestigt sind und über den Rohrboden (34) hinausragen, wobei mindestens eines der Heiz- oder Kühlrohre (50) durch einen eingesetzten Stabilisator (2) stabilisiert ist, wobei das Heiz- oder Kühlrohr (50) einen ersten Rohrabschnitt aufweist, der innerhalb des Rohrbodens (34) befestigt ist, und einen zweiten Rohrabschnitt, der über den Rohrboden (34) hinausragt, wobei der Stabilisator (2) einen länglichen Körper (8) mit einem Klemmabschnitt (30) aufweist, der innerhalb des ersten Rohrabschnitts befestigt ist, und einen Stützabschnitt (26), der an dem zweiten Rohrabschnitt anliegt,
wobei der Stabilisator (2) so konstruiert ist, dass ein Fluid durch und/oder um seinen Körper (8) strömen kann,
wobei der Stabilisator (2) einen hinteren Abschnitt (III), einen vorderen Abschnitt (I) und einen mittleren Abschnitt (II) dazwischen umfasst, wobei der Klemmabschnitt (30) innerhalb des hinteren Abschnitts (III) angeordnet ist und der Stützabschnitt (26) innerhalb des vorderen Abschnitts (I) angeordnet ist;
wobei der hintere Abschnitt (III) einen zentralen Hohlraum (16) aufweist, der durch eine hintere Öffnung (18) zugänglich ist, und wobei der Hohlraum (16) von einer ringförmigen Wand (20) umschlossen ist,
**dadurch gekennzeichnet, dass** eine radiale Bohrung (24) durch die Wand (20) vom Hohlraum (16) bis zu einem kreisförmigen Spalt zwischen dem Körper (8) und dem Heiz- oder Kühlrohr (50) reicht und einen Fluid-Bypass bildet.

2. Wärmetauscher nach Anspruch 1, wobei der Wärmetauscher ein Dampferzeuger für einen Druckwasserreaktor ist.

3. Wärmetauscher nach Anspruch 2, mit einem an den Rohrboden (34) angrenzenden Dampfraum (36), und
wobei es sich bei den Kühl- oder Heizrohren um Dampferzeugerrohre (4) handelt, die so ausgelegt sind, dass sie im Normalbetrieb ein primäres Reaktorkühlmittel führen, wobei jedes Dampferzeugerrohr (4) einen ersten Rohrabschnitt aufweist, der im Rohrboden (34) befestigt ist, und einen zweiten Rohrabschnitt, der in den Dampfraum (36) hineinragt,
wobei mindestens eines der Dampferzeugerrohre (4) durch einen in den ersten Rohrabschnitt eingesetzten Verschlussstopfen (40) verschlossen ist, wobei der Stabilisator (2) ein separater Stabilisator (2) ist, der in das geschlossene Dampferzeugerrohr (4) neben oder über dem Verschlussstopfen (40) eingesetzt ist.

4. Wärmetauscher nach Anspruch 3, wobei der Körper (8) eine im Wesentlichen zylindrische Form aufweist.

5. Wärmetauscher nach Anspruch 3 oder 4, wobei der Stabilisator (2) einen weiteren Stützabschnitt (28) aufweist, der innerhalb des Mittelabschnitts (II) angeordnet ist.

6. Wärmetauscher nach Anspruch 5, wobei der weitere Stützabschnitt (28) innerhalb des ersten Rohrabschnitts angeordnet ist.

7. Wärmetauscher nach einem der Ansprüche 3 bis 6, wobei der Klemmabschnitt (30) und der/die Stützabschnitt(e) (26, 28) einen größeren Außendurchmesser als der Rest des Körpers (8) aufweisen.

8. Wärmetauscher nach Anspruch 7, wobei der Stabilisator (2) am Dampferzeugerrohr (4) durch Walzexpansion eines Abschnitts der Wand (20) um den Hohlraum (16) befestigt ist.

9. Wärmetauscher nach einem der Ansprüche 3 bis 8, wobei der Stabilisator (2) einstückig ausgebildet ist.

10. Wärmetauscher nach Anspruch 9, wobei der Stabilisator (2) aus einer Legierung hergestellt ist.

11. Wärmetauscher nach einem der Ansprüche 3 bis 10, wobei der Verschlussstopfen (40) in Strömungsrichtung des Primärreaktorkühlmittels gesehen vor dem Stabilisator (2) angeordnet ist.

12. Verfahren zur Stabilisierung eines Heiz- oder Kühlrohres (50) eines Wärmetauschers, wobei das Heiz- oder Kühlrohr (50) einen ersten, in einem Rohrboden (34) befestigten Rohrabschnitt und einen zweiten, über den Rohrboden (34) hinausragenden Rohrabschnitt aufweist, wobei ein Stabilisator (2) in das Heiz- oder Kühlrohr (50) eingesetzt und eingeklemmt wird, wobei der Stabilisator (2) einen langgestreckten Körper (8) mit einem im ersten Rohrabschnitt befestigten Klemmabschnitt (30) und einem am zweiten Rohrabschnitt anliegenden Stützabschnitt (26) aufweist,
wobei der Stabilisator (2) so konstruiert ist, dass ein Fluid durch und/oder um seinen Körper (8) strömen kann,
wobei der Stabilisator (2) einen hinteren Abschnitt (III), einen vorderen Abschnitt (I) und einen mittleren Abschnitt (II) dazwischen umfasst, wobei der Klemmabschnitt (30) innerhalb des hinteren Abschnitts (III) angeordnet ist und der Stützabschnitt (26) innerhalb des vorderen Abschnitts (I) angeordnet ist;
wobei der hintere Abschnitt (III) einen zentralen Hohlraum (16) aufweist, der durch eine hintere Öffnung (18) zugänglich ist, und wobei der Hohlraum (16) von einer ringförmigen Wand (20) umschlossen ist, und
wobei eine radiale Bohrung (24) durch die Wand (20) vom Hohlraum (16) bis zu einem kreisförmigen Spalt zwischen dem Körper (8) und dem Heiz- oder Kühlrohr (50) reicht und einen Fluid-Bypass bildet;
und wobei anschließend das Heiz- oder Kühlrohr (50) durch einen separaten Verschlussstopfen (40) verschlossen und abgedichtet wird.

13. Verfahren nach Anspruch 12, wobei der Wärmetauscher ein Dampferzeuger ist.

## Revendications

1. Echangeur de chaleur avec un certain nombre de tubes de chauffage ou de refroidissement (50), chacun fixé dans une plaque tubulaire (34) et dépassant de la plaque tubulaire (34), dans lequel au moins un des tubes de chauffage ou de refroidissement (50) est stabilisé par un stabilisateur inséré (2), le tube de chauffage ou de refroidissement (50) comprenant une première section de tube fixée dans la plaque tubulaire (34) et une seconde section de tube dépassant de la plaque tubulaire (34), le stabilisateur (2) comprenant un corps allongé (8) avec une section de serrage (30) fixée à l'intérieur de la première section de tube et une section de support (26) reposant sur la seconde section de tube,
dans lequel le stabilisateur (2) est conçu pour permettre un écoulement de fluide à travers et/ou autour de son corps (8),
dans lequel le stabilisateur (2) comprend une section arrière (III), une section avant (I) et une section intermédiaire (II) entre celles-ci, dans lequel la section de serrage (30) est agencée dans la section arrière (III) et la section de support (26) est agencée dans la section avant (I) ;
dans lequel la section arrière (III) comprend une cavité centrale (16) accessible par une ouverture arrière (18), et dans lequel la cavité (16) est entourée d'une paroi annulaire (20),
**caractérisé en ce qu'**un trou radial (24) traverse la paroi (20) depuis la cavité (16) jusqu'à un espace circulaire entre le corps (8) et le tube de chauffage ou de refroidissement (50), formant une dérivation de fluide.

2. Échangeur de chaleur selon la revendication 1, dans lequel l'échangeur de chaleur est un générateur de vapeur pour un réacteur à eau sous pression.

3. Échangeur de chaleur selon la revendication 2, comprenant un espace vapeur (36) attenant à la plaque tubulaire (34), et
dans lequel les tubes de refroidissement ou de chauffage sont des tubes de générateur de vapeur (4) étant conçus pour transporter un fluide de refroidissement primaire de réacteur en fonctionnement normal, chaque tube de générateur de vapeur (4) comprenant une première section de tube étant fixée dans la plaque tubulaire (34) et une seconde section de tube faisant saillie dans l'espace vapeur (36),
dans lequel au moins un des tubes de générateur de vapeur (4) est fermé par un bouchon d'étanchéité (40) inséré dans la première section de tube, le stabilisateur (2) étant un stabilisateur séparé (2) inséré dans ledit tube fermé de générateur de vapeur (4) à côté ou au-dessus du bouchon d'étanchéité (40).

4. Échangeur de chaleur selon la revendication 3, dans lequel le corps (8) a une forme essentiellement cylindrique.

5. Échangeur de chaleur selon la revendication 3 ou 4, dans lequel le stabilisateur (2) comprend une autre section de support (28) agencée à l'intérieur de la section intermédiaire (II).

6. Échangeur de chaleur selon la revendication 5, dans lequel ladite autre section de support (28) est agencée à l'intérieur de la première section de tube.

7. Échangeur de chaleur selon l'une quelconque des revendications 3 à 6, dans lequel la section de serrage (30) et la ou les sections de support (26, 28) ont un diamètre extérieur plus grand que le reste du corps (8).

8. Échangeur de chaleur selon la revendication 7, dans lequel le stabilisateur (2) est fixé au tube de générateur de vapeur (4) par dilatation par rouleau d'une section de la paroi (20) autour de la cavité (16).

9. Échangeur de chaleur selon l'une quelconque des revendications 3 à 8, dans lequel le stabilisateur (2) est formé d'un seul tenant.

10. Échangeur de chaleur selon la revendication 9, dans lequel le stabilisateur (2) est constitué d'un alliage.

11. Échangeur de chaleur selon l'une quelconque des revendications 3 à 10, dans lequel le bouchon d'étanchéité (40) est agencé en amont du stabilisateur (2), vu dans le sens d'écoulement du liquide de refroidissement primaire de réacteur.

12. Procédé de stabilisation d'un tube de chauffage ou de refroidissement (50) d'un échangeur de chaleur, le tube de chauffage ou de refroidissement (50) comprenant une première section de tube fixée à l'intérieur d'une plaque tubulaire (34) et une seconde section de tube dépassant de la plaque tubulaire (34), dans lequel un stabilisateur (2) est inséré et serré dans le tube de chauffage ou de refroidissement (50), le stabilisateur (2) comprenant un corps allongé (8) avec une section de serrage (30) fixée à l'intérieur de la première section de tube et une section de support (26) reposant sur la seconde section de tube,
dans lequel le stabilisateur (2) est conçu pour permettre un écoulement de fluide à travers et/ou autour de son corps (8),
dans lequel le stabilisateur (2) comprend une section arrière (III), une section avant (I) et une section intermédiaire (II) entre celles-ci, dans lequel la section de serrage (30) est agencée dans la section arrière (III) et la section de support (26) est agencée dans la section avant (I) ;
dans lequel la section arrière (III) comprend une cavité centrale (16) accessible par une ouverture arrière (18), et dans lequel la cavité (16) est entourée d'une paroi annulaire (20), et
dans lequel un trou radial (24) traverse la paroi (20) depuis la cavité (16) jusqu'à un espace circulaire entre le corps (8) et le tube de chauffage ou de refroidissement (50), formant une dérivation de fluide ;
et dans lequel le tube de chauffage ou de refroidissement (50) est ensuite fermé et scellé par un bouchon d'étanchéité séparé (40).

13. Procédé selon la revendication 12, dans lequel l'échangeur de chaleur est un générateur de vapeur.
